(19) Europäisches Patentamt
European Patent Office
Office européen des brevets

(11) Publication number: **0 091 253**
**B1**

(12) # EUROPEAN PATENT SPECIFICATION

(45) Date of publication of patent specification: **11.06.86**

(51) Int. Cl.⁴: **G 02 B 6/44**

(21) Application number: **83301724.7**

(22) Date of filing: **28.03.83**

(54) **A melt extruded elongated member of a thermotropic liquid crystalline polymer for use as a stiffening support in an optical fiber cable and fiber optic cables containing such an elongated member.**

(30) Priority: **02.04.82 US 364823**
**02.04.82 US 364824**

(43) Date of publication of application:
**12.10.83 Bulletin 83/41**

(45) Publication of the grant of the patent:
**11.06.86 Bulletin 86/24**

(84) Designated Contracting States:
**AT BE CH DE FR GB IT LI LU NL SE**

(56) References cited:
**DE-A-2 347 408**
**DE-A-2 830 623**
**DE-A-2 928 678**
**DE-A-2 944 947**
**US-A-3 849 514**
**US-A-3 859 251**
**US-A-4 093 342**

(73) Proprietor: **CELANESE CORPORATION**
**1211 Avenue of the Americas**
**New York New York 10036 (US)**

(72) Inventor: **Ide, Yoshiaki**
**178 Sandford Avenue**
**North Plainfield New Jersey (US)**
Inventor: **Kiss, Gabor**
**43 Morris Avenue**
**Summit New Jersey (US)**
Inventor: **Yoon, Hyun Nam**
**50 Montrose Avenue**
**Summit New Jersey (US)**

(74) Representative: **De Minvielle-Devaux, Ian Benedict Peter et al**
**CARPMAELS & RANSFORD**
**43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Optical fibers are being increasingly looked to as a medium in which information can be conveniently transmitted by light waves. Such mode of communication offers significant advantages over more conventional transmission media (eg, copper wire) wherein electrical impulses are utilized. Illustrative examples of the advantages offered by fibre optics include (a) an increased information transmission capability primarily because of the large available bandwith, (b) immunity to electromagnetic interference, (c) reduced size and weight, (d) improved trasmission security which precludes tapping without detection, and (e) better transmission quality. The optical fibers required for such transmissions commonly are formed of glass or transparent plastic and are recognized commonly to be delicate, brittle, and fragile and to necessitate special measures to insure their safety during installation and use. For instance, excessive bending will irreversibly destroy the usefulness of such fibers and elongations of less than one percent commonly will result in complete breakage (eg. 0.12 to 0.25 percent elongation to break).

Heretofore when optical fibers have been used in communications applications they have been present in a cable assembly which is intended to provide the required safety for the same. The provision of certain strength or stiffening members within the optical fiber cable has heretofore been recognized to be essential to insure the survival of the delicate optical fibers. For instance, the use of metal wire reinforcement has been proposed in United States Patent Nos 3 865 466 and 4 110 001. Other materials such as stainless steel wire, nylon, lyotropic liquid crystalline aramid polymer (eg, Kevlar® poly(p-phenylene terephthalamide), polyethylene, polyethylene terephthalate, cotton, E and S glass/epoxy rods, etc, have also been proposed. See for instance, United States Patent Nos 4 037 922, 4 093 342 and 4 226 504.

Metal wire reinforcement of the prior art has had the disadvantage of introducing an electrical conductor within the cable assembly which destroys its usefulness for a number of end use applications via electrical interference. Such metallic cable component adds significantly to the weight of the resulting cable thereby militating against handling ease. Also, the metallic component due to thermal expansion and contraction may create problems during use of the cable under varying environmental conditions and to render the cable susceptible to lightning damage.

The use of poly(p-phenylene terephthalamide) as the reinforcement has first necessitated the dissolution of the polymer in an appropriate solvent for the same, and the solution spinning of a large number of relatively fine denier fibers (eg thousands of filaments) which may optionally be embedded in an appropriate resin (eg, an epoxy resin) to form the stiffening member. Such poly(p-phenylene terephthalamide) is incapable of melt extrusion and the procedures required to form the reinforcing member are time consuming, and involve considerable expense. Also, the resulting stiffening member because of the fabrication techniques inherently required is only with difficulty amenable to formation into complex cross-sectional configurations.

Reinforcing members available in the prior art which are composed of E and S glass/epoxy rods are commonly formed by pultrusion and have been found to present shortcomings during service within the resulting cable assembly. For instance, such rods may be susceptible to undesirable thermal expansion and contraction and have tended to be unduly inflexible and relatively brittle which may result in cable failure if the cable assembly is sharply bent.

Some reinforcement arrangements while generally serving to prevent excessive deformation of the optical fiber may, under certain conditions, such as temperature change for example, actually contribute to such excessive deformations. That is, the particular linear thermal expansion characteristics of the reinforcement may render the overall coefficient of linear thermal expansion of the cable significantly different from that of the optical fiber. As a result, the optical fiber may be subject to excessive deformation under extreme temperature conditions.

For example, attention is directed to Figures 1 and 2 which depict a fiber-optic cable unit 8 wherein an optical fiber 10 is encased within a buffer tube 12 formed of a thermoplastic material. The inner diameter of the tube may be of greater diameter than the outer diameter of the fiber, the space therebetween filled with a water-repelling medium. Additional reinforcement (not shown) would typically be provided (eg, a central high-strength elongated member or high-strength wires helically wound around the tube 12), since a conventional thermoplastic tube is too week to constitute a strength member. This can be expected to result in a condition where the net linear thermal expansion coefficient of the overall cable varies considerably from that of the optical fiber itself. Accordingly, as the temperature increases, the cable tends to expand to a greater extent than the optical fiber, whereby the fiber is strained. One manner of minimizing this problem is to pre-slacken the fiber, as depicted in Figure 3, whereby the overall cable can expand to a greater extent than the optical fiber itself, without straining the fiber (ie, the slack is "taken-up" during cable expansion).

However, the amount of pre-slack which can be "built-into" the cable is limited, due to the fact that during colder temperatures the overall cable contracts to a greater extent than the optical fiber due to the significant difference in the coefficient of linear thermal expansion. Thus, as the temperature decreases, the amount of slack increases due to the lesser extent of contraction of the optical fiber. If this results in the fiber bearing against the wall of the tube (Fig. 4), the "microbending losses" in the fiber are significantly increased, thereby increasing attenuation losses of the fiber.

Therefore, it will be appreciated that a mismatch between the linear thermal expansion coefficient of the optical fiber and the net linear thermal expansion coefficient of the overall cable places limits on the upper and lower temperatures in which the cable may be effectively utilized; the greater the mismatch, the smaller the range of effective utilization.

Another problem occurring in connection with fiber-optic cable relates to the difficulty in repairing a broken cable. When a break occurs, it is presently necessary to locate and identify the damaged optical fiber(s) in order to perform a splicing operation. This procedure is difficult enough due to the small size of the fiber, but is made even more difficult in conventional cables which are cluttered with numerous reinforcing strands. Although it has been previously proposed to position each fiber within its own individual tube, eg, an extruded polyethylene terephthalate tube, in order to facilitate fiber identification, such an arrangement would add to the size, weight, and internal clutter of the cable.

A further problem relates to the fact that conventional techniques for reinforcing the cable must be adapted to the particular type of cable being produced, ie, the cable must be redesigned for the particular end uses. One reason for this relatively expensive requirement is that in conventional cables the reinforcement is common to all of the optical fibers. In an effort to deal with this problem, it has been propoosed to individually encase each fiber (see US Patent No 4 188 088 issued on February 12, 1980). This is achieved by encasing each fiber within a dumbell-shaped sheath of flexible polymer material. A separate strengthener strand is embedded within another portion of the sheath. This arrangement, however, does not minimize the bulk and weight problems, nor the thermal-induced strain problems discussed earlier.

According to the present invention we provide a melt extruded elongated member of substantially uniform cross-sectional configuration for use as a stiffening support in an optical fiber cable, such member being composed of a thermotropic liquid crystalline polymer.

Figs 5, 6 and 7 of the accompanying drawings illustrate typical cross-sectional configurations for the melt extruded elongated member in accordance with the present invention and which are suitable as stiffening supports in optical fiber cables.

Fig 5 illustrates a cross-sectional configuration of a melt extruded elongated member wherein the cross-section is circular.

Fig 6 illustrates the cross-sectional configuration of a melt extruded elongated member wherein the cross-section is tubular.

Fig 7 illustrates the cross-sectional configuration of a melt extruded elongated member in accordance with the present invention wherein the cross-section has a central core and a plurality of projections radiating outwardly therefrom with the channels between projections forming locations for the disposition of a plurality of delicate optical fibers during the formation of an optical fiber cable.

Also in accordance with the invention, we provide a reinforced fiber optic cable which comprises at least one optical fiber and at least one elongated melt extruded member formed of a thermotropic liquid crystalline polymer extending generally in the direction of the fiber.

In one embodiment of the invention a reinforced fiber optic cable comprises at least one optical fiber and at least one elongated member of a thermotropic liquid crystalline polymer the member comprising a hollow tube which has been formed by melt extrusion.

The cable may include a plurality of optical fibers and such a cable may also include one or more elongated members. In a desirable form of such a cable, each of the optical fibers in the cable is provided with its own elongated member in the form of a tube within which the optical fiber is disposed.

In another embodiment of the invention the cable is provided with a plurality of fibers and an elongated member which is disposed centrally of the fibers. In one aspect of such a cable, the elongated member is in the form of a channel member which includes a central core and a plurality of projections radiating outwardly therefrom to form locations for the plurality of optical fibers which are located therein.

In another embodiment of the invention the fibres are arranged in spaced rows with a layer of a thermotropic liquid crystalline polymer separating adjacent rows.

The fiber optic cable of the invention may, and often will, be provided with a jacket within which the optical fibers and elongated members are located. The jacket may either be a tube forming a continuous sheath for the cable or the jacket may be formed as a helical winding of an elongated member having a rectangular cross section. Preferably the jacket is composed of a thermotropic liquid crystalline polymer.

One method of making a reinforced fiber-optic cable according to the invention comprises the steps of forming an elongated member by extruding a thermotropic liquid crystalline polymer as a hollow tube surrounding an optical fiber.

Another method comprises the steps of forming an elongated member by extruding a thermotropic liquid crystalline polymer in the shape of a channel member having a core and a plurality of longitudinal channels and positioning optical fibers within respective ones of the channels. A jacket, which may be of a thermotropic liquid crystalline polymer is then located around the channel member and fibers.

A further method involves the steps of extruding an elongated member from a thermotropic liquid crystalline polymer and positioning the elongated member adjacent an optical fiber so that it extends generally in the longitudinal direction thereof. A jacket is then disposed around the optical fiber and elongated member. The jacket may be formed of a thermotropic liquid crystalline polymer.

The thermotropic liquid crystalline polymer contains unique characteristics in the area of tensile modulus, coefficient of linear thermal expension, and ease of manufacture which render it ideally suited to

the manufacture of fiber-optic cable and enable a single component to perform multiple functions whereby the size, weight, and bulk of the cable can be greatly enhanced. In cases where the optical fiber is formed of glass, and wherein the thermotropic liquidd crystalline polymer has a coefficient of linear thermal expansion of from $-10 \times 10^{-6}/°F$ to $-4 \times 10^{-6}/°F$ ($-18 \times 10^{6}/°C$ to $-7 \times 10^{6}/°C$), the temperature range in which the fiberoptic cable may be effectively utilized, is significantly increased. The polymer from which the elongated members of the present invention is formed must be a thermotropic liquid crystalline polymer which is of the requisite molecular weight to be capable of undergoing melt extrusion. Such thermotropic liquid crystalline polymers have been known in the art but have not prior to the present invention been recognized to be suitable for forming into elongated members for use as supports in optical fiber cables.

As is known in polymer technology a thermotropic liquid crystalline polymer exhibits optical anisotropy in the melt. The anisotropic character of the polymer melt may be confirmed by conventional polarized light techniques whereby crossed-polarizers are utilized. More specifically, the anisotropic nature of the melt phase may conveniently be confirmed by the use of a Leitz polarizing microscope at a magnification of 40X with the sample on a Leitz hot stage and under a nitrogen atmosphere. The amount of light transmitted changes when the sample is forced to flow; however the sample is optically anisotropic even in the static state. On the contrary typical melt processable polymers do not transmit light to any substantial degree when examined under identical conditions.

Representative classes of polymers from which the thermotropic liquid crystalline polymer suitable for use in the present invention may be selected include wholly aromatic polyesters, aromatic-aliphatic polyesters, wholly aromatic poly (ester-amides), aromatic-aliphatic poly(ester-amides), aromatic polyazomethines, aromatic polyester-carbonates, the mixtures of the same. In preferred embodiments the thermotropic liquid crystalline polymer is a wholly aromatic polyester, a wholly aromatic poly(ester-amide), or an aromatic-aliphatic poly(ester-amide). In such wholly aromatic polyester and wholly aromatic poly(ester-amide) each moiety present within the polymer chain contributes at least one aromatic ring. Also, it is preferred that naphthalene moieties he included in the thermotropic liquid crystalline polymer, eg 6-oxy-2-naphthoyl moiety, 2,6-dioxynaphthalene moiety, or 2,6-dicarboxynaphthalene moiety, in a concentration of not less than about 10 mole percent. The particularly preferred naphthalene moiety for inclusion in the thermotropic liquid crystalline polymer is the 6-oxy-2-naphthoyl moiety in a concentration of not less than about 10 mole percent.

Representative wholly aromatic polyesters which exhibit thermotropic liquid crystalline properties include those disclosed in the following United States Patents which are herein incorporated by reference: 3 991 013; 3 991 014; 4 066 620; 4 067 852; 4 075 262; 4 083 829; 4 093 595; 4 118 372; 4 130 545; 4 146 702; 4 153 779; 4 156 070; 4 159 365; 4 161 470; 4 169 933; 4 181 792; 4 183 895; 4 184 996; 4 188 476; 4 201 856; 4 219 461; 4 224 433; 4 226 970; 4 230 817; 4 232 143; 4 232 144; 4 238 598; 4 238 599; 4 238 600; 4 242 496; 4 245 082; 4 245 084; 4 247 514; 4 256 624; 4 265 802; 4 267 304; 4 269 965; 4 279 803; 4 299 756; 4 294 955; 4 337 191; 4 337 190; 4 318 841; and 4 355 134, which are herein incorporated by reference. As discussed hereafter the wholly aromatic polyester of US Patent No 4 161 470 is particularly preferred for use in the present invention.

Representative aromatic-aliphatic polyesters which exhibit thermotropic liquid crystalline properties are copolymers of polyethylene terephthalate and hydroxybenzoic acid as disclosed in *Polyester X-7G-A Self Reinforced Thermoplastic,* by W J Jackson, Jr, H F Kuhfuss, and T F Gray, Jr, 30th Anniverary Technical Conference, 1975 Reinforced Plastics/Composites Institute, the Society of the Plastics Industry, Inc, Section 17-D, pages 1—4. A further disclosure of such copolymers can be found in "Liquid Crystal Polymers: I Preparation and Properties of p-Hydroxybenxoic Acid Copolymers, *Journal of Polymer Science, Polymer Chemistry Edition,* Vol 14, pages 2043 to 2058 (1976), by W J Jackson, Jr and H F Kuhfuss. See also United States Patents 4 318 842 and 4 355 133, which are herein incorporated by reference.

Representative wholly aromatic and aromatic-aliphatic poly(ester-amides) which exhibit thermotropic liquid crystalline properties are disclosed in United States Patents Nos 4 272 625; 4 330 457; 4 351 917; 4 351 918; 4 341 688; 4 355 132; and 4 339 375, which are herein incorporated by reference. As discussed hereafter the poly(ester-amide) of United States Patent No 4 330 457 is particularly preferred for use in the present invention.

Representative aromatic polyazomethines which exhibit thermotropic liquid crystalline properties are disclosed in United States Patent Nos 3 493 522; 3 493 524; 3 503 739; 3 516 970; 3 516 971; 3 526 611; 4 048 148; and 4 122 070. Each of these patents is herein incorporated by reference in its entirety. Specific examples of such polymers include poly (nitrilo-2-methyl-1,4-phenylenenitrilomethylidyne-1,4-phenylene-methylidyne); and poly(nitrolo-2-chloro-1,4-phenylenenitrilomethylidyne-1,4-phenylenemethylidyne).

Representative aromatic polyester-carbonates which exhibit thermotropic liquid crystalline properties are disclosed in United States Patent Nos 4 107 143; 4 284 757; and 4 371 660 which are herein incorporated by reference. Examples of such polymers include those consisting essentially of p-oxybenzoyl units, p-dioxyphenyl units, dioxycarbonyl units, and terephthoyl units.

A thermotropic liquid crystalline polymer commonly is selected for use in the formation of the elongated member which possesses a melting temperature within the range that is amenable to melt extrusion while employing commercially available equipment. For instance, thermotropic liquid crystalline

polymers commonly are selected which exhibit a melting temperature somewhere within the range of approximately 250 to 400°C.

The thermotropic liquid crystalline polymer selected preferably also exhibits an inherent viscosity of at least 2.0 dl/g when dissolved in a concentration of 0.1 percent by weight in pentafluorophenol at 60°C (eg an inherent viscosity of approximately 2.0 to 15.0 dl/g).

The partiuclarly preferred wholly aromatic polyester for use in the present invention is that disclosed in United States Patent No 4 161 470 which is capable of forming an anisotropic melt phase at a temperature below approximately 350°C. This polyester consists essentially of the recurring moieties I and II wherein:

I is 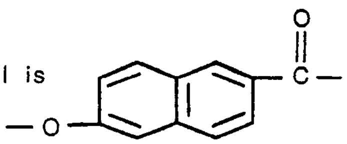 , and II is 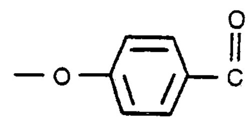

The polyester comprises approximately 10 to 90 mole percent of moiety I, and approximately 10 to 90 mole percent of moiety II. In one embodiment, moiety II is present in a concentration of approximately 65 to 85 mole percent, and preferably in a concentration of approximately 70 to 80 mole percent, eg., approximately 73 mole percent. In another embodiment, moiety II is present in a lesser proportion of approximately 15 to 35 mole percent, and preferably in a concentration of approximately 20 to 30 mole percent. In addition, at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, substituted phenyl and mixtures thereof. Such polymer preferably has an inherent viscosity of approximately 3.5 to 10 dl/g when dissolved in a concentration of 0.1 percent by weight in pentafluorophenol at 60°C.

The particularly preferred wholly aromatic poly(ester-amide) or aromatic-aliphatic poly(ester-amide) for use in the present invention is disclosed in United States Patent No 4 330 457 which is capable of forming an anisotropic melt phase at a temperature below approximately 400°C. The poly(ester-amide)s there disclosed consist essentially of recurring moieties I, II, III, and, optionally, IV wherein:

I is 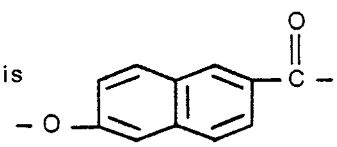 II is 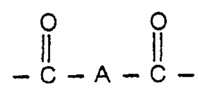 ,

where A is a divalent radical comprising at least one aromatic ring or a divalent *trans*-1,4-cyclohexylene radical;

III is —Y—Ar—Z—, where Ar is a divalent radical comprising at least one aromatic ring, Y is O, NH, or NR, and Z is NH or NR, where R is an alkyl group of 1 to 6 carbon atoms or an aryl group; and

IV is —O—Ar'—O—, where Ar' is a divalent radical comprising at least one aromatic ring;

wherein at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, substituted phenyl, and mixtures thereof, and wherein said poly(ester-amide) comprises approximately 10 to 90 mole percent of moiety I, approximately 5 to 45 mole percent of moiety II, approximately 5 to 45 mole percent of moiety III, and approximately 0 to 40 mole percent of moiety IV. The preferred dicarboxy aryl moiety II is:

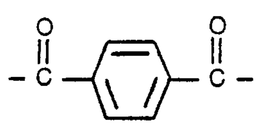

the preferred moiety III is:

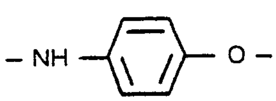 or 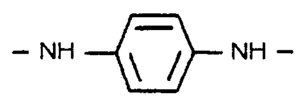

and the preferred dioxy aryl moiety IV is:

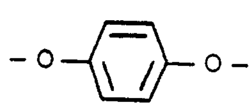

Such polymer preferably has an inherent viscosity of approximately 2.0 to 10 dl/g when dissolved in a concentration of 0.1 percent by weight in pentafluorophenol at 60°C.

When forming the melt extruded elongated member of the present invention conventional melt extrusion apparatus can be used wherein an extrusion die is selected having a shape which corresponds to the cross-sectional configuration of the elongated member to be formed with the exception that the orifice dimensions will be larger than the dimensions of the resulting elongated member in view of drawdown of the molten polymer which occurs imediately following extrusion. Polymers other than thermotropic liquid crystalline polymers are recognized to be incapable of melt extrusion to form articles of the cross-sectional area herein discussed wherein the profile will accurately correspond to the die shape. Accordingly, the thermotropic liquid crystalline polymers do not exhibit any susbtantial elastic recoil upon exiting from the extrusion die as do conventional polymers which are melt extruded. Suitable extrusion apparatus are described, for example, in the "Plastics Engineering Handbook" of the Society of the Plastics Industry, Pages 156 to 203, 4th Edition, edited by Joel Frados, Van Nostrand Reinhold Company, 1976. The elongated members of the present invention optionally may be formed in accordance with the teachings of United States Patent No 4 332 759 of Yoshiaki Ide, entitled "Process for Extruding Liquid Crystal Polymer".

In order to induce relatively high molecular orientation coextensive with the length of the elongated member, the extrudate is drawn while in the melt phase immediately adjacent the extrusion orifice and prior to complete solidification. The extent of such drawdown is influenced by the take up speed under which the elongated member is wound or otherwise collected on an appropriate support or collection device. The resulting draw ratio is defined as the ratio of the die cross-sectional area to that of the cross-sectional area of the fully solidified extrudate. Such draw ratios commonly range between 4 and 100, and preferably between approximately 10 and 50 while utilizing the equipment described in the Examples.

In addition to the drawdown appropriate cooling must be applied to the extrudate of thermotropic liquid crystalline polymer intermediate to the extrusion orifice and the point of collection. Appropriate fluid media, eg a gas or a liquid, may be selected to impart the desired cooling. For instance, the extrudate may be simply contacted by a stream of air or other gas or preferably immersed in a circulating bath of water or other liquid which is maintained at an appropriate temperature to impart the cooling required for solidification.

Fiber optic cables in accordance with the invention will now be described with reference to the accompanying drawings in which like numerals designate like elements, and in which:

Fig 1 is a cross-sectional view of a fiber-optic cable unit in which an optical fiber is disposed within a tube;

Fig 2 is a schematic longitudinal sectional view through the unit depicted in Figure 1;

Fig 3 is a view similar to Figure 2 depicting one technique for resisting thermally-induced straining of the optical fiber;

Fig 4 is a view of the unit depicted in Figure 3 in response to the unit being subjected to cold temperatures;

Fig 8 is a schematic view of a plurality of cable units being bundled together;

Fig 9 is a cross-sectional view of another type of fiber-optic cable;

Fig 10 is a cross-sectional view through still another type of fiber-optic cable;

Fig 11 is a cross-sectional view through a fiber-optic cable employing a channel member;

Fig 12 is a cross-sectional view of a fiber-optic cable formed of rows of optical fibers separated by layers of thermotropic liquid crystalline polymer and surrounded by a jacket of that material.

One type of fiber-optic cable in accordance with the present invention is depicted in Figs 1 and 2, wherein a conventional optical fiber 10 is arranged within a buffer tube 12. Thus, the arrangement of the fiber and tube in accordance with the present invention can be similar to that of the prior art. In accordance with the present invention, however, the buffer tube is formed from a thermotropic liquid crystalline polymer.

A buffer tube formed of thermotropic liquid crystalline polymer constitutes more than a mere envelope for the optical fiber. Due to its high modulus and strength in tension, this tube consistutes a strengthening member which, in many instances satisfies all the reinforcement requirements of the fiber. In this regard, a tube of thermotropic liquid crystalline polymer material of 38 mils (0.97 mm) outer diameter and 9.5 mils (0.24 mm) thickness possesses a tensile modulus of $4.5 \times 10^6$psi (310 Kbar). The tensile modulus of a tube of the same diameter formed of polyethylene terephthalate is much lower by comparison. Such an extruded hollow tubular configuration cannot be formed by extrusion of poly(p-phenylene terephthalamide), an organic material commonly employed as strength material in fiber optic cable, since such material cannot be melt extruded. Such a tube could only be formed of poly(p-phenylene terephthalamide) by the use of an adhesive matrix, at much greater cost due to the technological difficulty and slow speed of the pultrusion process and slow rate of cure of the required matrix.

A fiber-optic cable 16 can be fabricated by bundling together a desired plurality of the tube-and-fiber units 8. For example, the bundling can be achieved either by conventional cable jacketing techniques or by an outer jacket 18 in the form of a helical wrap of thermotropic liquid crystalline polymer (Fig. 8). In the cable 16 thus produced, the tubes 12 serve as the strength members for the individual fibers, and thus for the cable as a whole. The need for additional reinforcement may thus be eliminated or significantly minimized. In addition, the use of thermotropic liquid crystalline polymer tape as a cable wrap allows

greater control of the thermal expansion of the cable, by controlling pitch, tape thickness, or the thermal expansion coefficient of the tape itself via control of molecular orientation within the tape.

Moreover, the fabrication of different cable designs is simplified since each fiber is individually reinforced rather than the fibers being commonly reinforced as a group. Thus, cables of different capacity can be provided by selecting a desired number of the individually reinforced fibers. The individual fibers are easier to isolate and identify when repair to the cable is necessary, since each fiber is contained in its own reinforcing tube and since there is no multitude of reinforcement strands or yarns which clutter the inside of the cable.

The tube 12 is formed-in-place around the optical fibers 10 by means of an extrusion process.

The conditions of temperature and pressure under which the thermotropic liquid crystalline polymer can be extruded will be influenced by the melting temperature of the polymer and its viscosity as will be apparent to those skilled in the art. Typically, extrusion temperature ranges from 0 to 30°C above the melting point (which ranges from 200°C to 350°C) and the pressure ranges from 100 psi to 5,000 psi (6.89 bar to 345 bar) depending on the temperature and the viscosity of the polymer.

The extruded members as produced exhibit very high mechanical properties. On the other hand, similar members produced from conventional polymers have an order of magnitude lower properties. Even if extrudates of conventional polymers are drawn in the solid state, the properties are much lower than those of thermotropic liquid crystalline polymers produced according to the above method.

Fabrication of a tube requires a tube die. Preferably, the tube is melt extruded while simultaneously passing the optical fiber through the die. In order to provide melt drawdown only to the tube, the melt should not touch the optical fiber and the extrusion rate or take-off speed should be controlled to accomplish this. Specifically, the extrusion speed of the annular melt should be slower than the take-off speed by factor of the drawdown ratio, and the take-off speed of the tube and the optical fiber should be nearly the same.

In cases where a space is provided between the fiber and tube, such space may be filled with any desired medium, such as gas or a water-repellant agent, depending upon the intended use of the cable. Alternatively, the tube can be provided as a tight-fit whereby such space is not created.

It will be appreciated that cables will be subject to differing types and magnitudes of forces, depending upon the manner of installing and operating the cable. For example, during aerial use, where the cable may be suspended from poles, greater tensile forces may be encountered from wind, ice, etc. Depending upon the particular use to which the cable is subjected, then, it may be desirable to provide the cable with a different type of reinforcement, comprising helically wound elongated members 22 of circular cross-section which encompasses the jacket 18 (Fig 9). In this case the tubes 8 may be formed of conventional thermoplastic materials, or may also be formed of thermotropic liquid crystalline polymers. An outer jacket 25 can be positioned around the elongated member 22 and the optic fiber bundle. The elongated members 22 are formed of thermotropic liquid crystalline polymer, and would preferably be extruded in a manner similarly to that described earlier with regard to tubes except that a rod die must be used instead of a tube die.

Another type of additional reinforcement is depicted in Fig 10 wherein a large thermotropic liquid crystalline polymer elongated member 28 is positioned centrally of the cable and is surrounded by a plurality of tube-encased fiber units 8. A jacket 30 surrounds the units 8. This jacket may comprise a wrap of thermotropic liquid crystalline tape if additional control of cable thermal expansion is desired. Such a tape wrap may contribute significantly to the tensile stiffness of the final cable.

In this regard, it will be appreciated that it is possible, in accordance with the present invention, to employ extruded thermotropic liquid crystalline polymer in the form of an elongated member as a replacement for the reinforcement presently employed in fiber-optic cable, regardless of whether tubes of thermotropic liquid crystalline polymer are employed. Thus, in accordance with the present invention, a fiber-optic cable having reinforcing elongated members, eg, elongated members of circular cross-section which are helically wrapped or positioned linearly, can be improved by forming those elongated members by melt extrusion of a thermotropic liquid crystalline polymer material.

Such an extrusion process would be similar to that discussed above with reference to the filament 22.

A single elongated member of thermotropic liquid crystalline polymer of 25 mils diameter possesses a tensile modulus of 4—10 × $10^6$ psi (276—689 kbar). A strand of Kevlar® poly(p-phenylene terephthalamide) of 26 mils (0.66 mm) diameter (which strand is formed of poly(p-phenylene terephthalamide) fibers adhered together by adhesive) possesses a tensile modulus of 11 ×$10^6$ psi (758 kbar). However, the elonagted member of thermotropic liquid crystalline is highly superior. That is, since poly(p-phenylene terephthalamide) is lyotropic, it is not melt extrudable, and thus cannot be extruded in the form of large or complex cross-sections as can a thermotropic liquid crystalline polymer in accordance with the present invention.

Another advantage of employing elongated members of thermotropic liquid crystalline polymer material occurs in cases where glass optical fibers are employed, since the coefficient of linear thermal expansion of thermotropic liquid crystalline polymer is negative, and controllable, so that a fiber-optic cable utilizing such members can be made to have a linear thermal expansion coefficient very similar to that of glass optical fibers, as discussed earlier.

The melt-extrudable characteristic of thermotropic liquid crystalline polymer material is particularly

beneficial in the formation of a channel-defining element 30, as depicted in Figure 11. Such an element 30 comprises a central hub 32 and a plurality of radial ribs 34. Outwardly open channels 36 are formed between circumferentially adjacent ribs 36. Optical fibers 38 are positioned within respective ones of the channels.

Channel elements of such configuration have heretofore been proposed for use in fiber-optic cable, primarily because (i) the individual fibers are precisely located by the channels, (ii) a void within the cable can be more readily filled with a water-repelling agent or the like, as compared with the arrangement of a tube-encased fiber as depicted in Figure 1, (iii) microbending losses at long wave lengths are reduced, and (iv) mass-splicing techniques can be used whereby an entire grooved rod with all fibers in spliced in one operation rather than having to break-out individual fibers for splicing.

In accordance with the present invention, such a channel-defining element is formed of thermotropic liquid crystalline polymer material. Accordingly, the channel element itself constitutes a strength member due to the high tensile properties of thermotropic liquid crystalline polymer material. Thus, the need for additional reinforcement can be eliminated or significantly minimized. Also, the negativity and magnitude of the coefficient of linear thermal expansion of the thermotropic liquid crystalline polymer material relative to that of glass is of great significance as explained earlier.

A further advantage relates to the simplicity of fabrication, since a strength member of thermotropic liquid crystalline polymer material can be easily extruded.

An alternate method of forming such a channel member is to machine channels into rods of thermotropic liquid crystalline polymer formed by methods described above.

A simple method of performing such a machining operation would be to pass the rod through a tool or die consisting of a multiplicity of circularly disposed cutting teeth, which would continuously cut channels corresponding to the shape of the teeth.

As noted earlier, the thermotropic liquid crystalline polymer is highly suited for use as a wrap 18 for the fiber-optic cable, especially due to the relatively large negative value of the coefficient of thermal expansion. Such an expedient may also take the form of a ribbon array, as depicted in Figure 12. A series of tapes 50 are passed through a die simultaneously with spaced rows 52 of optical fibers. The fibers adhere to layers of ethylene vinyl acetate adhesive on the tapes 50. Side tapes 54 enclose the sides of the ribbon, with the optical fibers sandwiched between the layers 50 of thermotropic liquid crystalline polymer. This type of cable can be employed as is, or can be helically twisted and surrounded by reinforcement.

It will be appreciated that the present invention enables fiber-optic cables of less size, bulk, and weight to be produced, without sacrificing stiffness and the ability to avoid straining of the optic fiber. The high tensile modulus and ease of fabrication of a thermotropic liquid crystalline polymer material as compared to a lyotropic liquid crystalline polymer, such as poly(p-phenylene terephthalamide), enables a cable component formed of a thermotropic liquid crystalline polymer to perform multiple functions, eg, to act as a strength member as well as a sheathing member. Thus, the quantity of elements which must be incorporated within the cable can be reduced.

Since a thermotropic liquid crystalline polymer material is dielectric, it can be employed in fiber-optic cable in cases where metallic reinforcement is unacceptable due to its electrical conductivity.

The high negativity of the coefficient of linear thermal expansion of thermotropic liquid crystalline polymer material and the ability to control the value of such a coefficient, renders the use of a thermotropic liquid crystalline polymer highly beneficial in fiber-optic cable containing fibers of glass, since the temperature range in which such cable can be effectively employed is significantly increased.

The ability of thermotropic liquid crystalline polymer material to be melt extruded enables members of relatively large and complex cross-section to be formed of a strength material. Previously, such members were in some instances formed of non-strength materials such as polyethylene terephthalate. Fabrication thereof from strength materials has required the gluing together of individual elongated members, a relatively expensive procedure. Thus, channel members of thermotropic liquid crystalline polymer material may be extruded by direct melt extrusion.

Reinforcing members formed of thermotropic liquid crystalline polymer material can be thinned to the point where the permissible elongation reaches fairly low levels, eg, 1—3%, and closely resembles that of glass. This assures that the glass and the reinforcement will both break when elongated by similar amounts, thereby avoiding the situation where some optical fibers break, but not the reinforcement. That is, it is considered preferable that the fiber-optic cable either function at full capacity or not at all. This is achieved by having the glass fibers and the reinforcement break at about the same time.

As illustrated in the drawings, the cross-sectional configuration of the melt extruded elongated member of the present invention which is suitable for improved service as a stiffening support in an optical fiber cable can be varied widely and can conform to the requirements of a large variety of optical cable designs. The resulting cross-sectional configuration is substantially uniform and can be monitored by use of a laser or other appropriate sensing device to insure the quality control demanded by the optical fiber cable industry. The elongated members of the present invention desirably possess a cross-sectional area of at leat $7.85 \times 10^{-5}$ square inch (0.051 $mm^2$) (eg $7.85 \times 10^{-5}$ to $3.14 \times 10^{-2}$ square inch (0.051 to 20.25 $mm^2$) and wherein no substantial portion of the cross-section measures less than approximately 0.01 inch (0.25 mm) or more than approximately 0.2 inch (5.08 mm). Accordingly, the smallest width for an elongated member of the present invention is considerably larger in cross-sectional area than the 58.3 denier (6.5 Tex)

fiber described in Example 12 of United States Patent NO 4 330 457 which would have a diameter of only approximately 0.003 inch (0.08 mm) and a cross-sectional area of only approximately $6.9 \times 10^{-6}$ square inch (0.0045 $mm^2$) (ie it is more than 10 times smaller in cross-sectional area in Example 12). In preference no substantial portion of the cross-section measures less than approximately 0.02 inch (0.51 mm) or more than approximately 0.2 inch (5.08 mm). Under such circumstances the cross-sectional area will be within the range of $3.14 \times 10^{-4}$ to $3.14\ 10^{-2}$ square inch (0.20 to 20.25 $mm^2$).

Preferably elongated members have a uniform circular cross section and a diameter of approximately 0.025 to 0.08 inch (0.63 to 2.03 mm). Preferred tubular elongated members of thermotropic liquid crystalline polymer have an outer diameter of approximately 0.04 to 0.2 inch (1.02 to 5.08 mm), and a wall thickness of no less than 0.01 inch (0.25 mm) (eg 0.01 to 0.05 inch (0.25 to 1.27 mm) in preferred embodiments).

The melt extruded elongated members of the present invention may have any length but typically will have a length of at least one mile (1.61 km), and preferably a length of at least four miles (6.44 km) (eg a length of four to seven miles (6.44 to 11.27 km) or more). Accordingly, the length of the elongated member advantageously corresponds to the length of optical fiber cable which is situated between transmission repeaters. If desired the length of the elongated member of thermotropic liquid crystalline polymer can be considerably longer than 7 miles (11.27 km).

If desired physical properties, such as tensile modulus, tensile strength, and elongation, of the solidified previously formed elongated member of thermotropic liquid crystalline polymer may optionally be enhanced by heat treatment at a temperature below the melting temperature of the thermotropic liquid crystalline polymer for a time sufficient to increase the melting temperature of the polymer by at least 10°C. For instance, the elongated member may be heated below the melting temperature while present in a nitrogen or other atmosphere for up to 24 hours at an elevated temperature within 50°C of the polymer melting temperature.

The physical properties which reside in the elongated member of thermotropic liquid crystalline polymer are considered to be unique and to be totally unattainable with other polymers which are capable of undergoing melt extrusion.

The tensile modulus of the elongated member of thermotropic liquid crystalline polymer is extremely high and is approximately 4,000,000 to 20,000,000 psi (275 Kbar to 1.38 Mbar) (eg 5,000,000 to 15,000,000 psi (345 Kbar to 1.03 Mbar). Such tensile modulus can be conveniently determined in accordance with the standard procedure of ASTM 2343—67 with strain gauge at 23°C. Accordingly, the elongated member of the present invention exhibits a remarkable tendency to withstand tensional strain of the type which would severely damage optical fibers because of their low elongation properties (eg approximately 0.12 to 0.25 percent elongation). Additionally, the elongated member of thermotropic liquid crystalline polymer typically exhibits an elongation of about 1 percent prior to breakage (eg an elongation of 1 to 2 percent or 1 to 3 percent) and will withstand only slightly more elongation than typical optical fibers. Such elongation can be conveniently determined in accordance with the standard procedure of ASTM 2343—67 with strain gauge at 23°C. This elongation renders the elongated member of the present invention highly compatible for use with glass optical fibers.

The tensile strength of the elongated member of thermotropic liquid crystalline polymer is also high and is at least 40,000 psi (2.76 bar) (eg 75,000 to 150,000 psi (5.17 to 10.34 bar). Such tensile strength can be conveniently determined in accordance with the standard procedure of ASTM 2343—67 with strain gauge at 23°C.

Additionally, the elongated member of thermotropic liquid crystalline polymer in accordance with the present invention has been found to exhibit a highly satisfactory coefficient of linear thermal expansion property unlike the metallic wires and glass rods presently utilized as stiffening members in optical fiber cables. For instance, in the stiffening members of the present invention the coefficient of linear thermal expansion is negative, and is readily controllable so as to approximate that of delicate glass optical fibers. In preferred embodiments the coefficient of linear thermal expansion of the elongated member of the present invention is within the range of approximately $-10 \times 10^{-6}$ to $-4 \times 10^{-6}$/°F ($-18 \times 10^{-6}$ to $-7 \times 10^{-6}$/°C). The coefficient of linear thermal expansion of commercially available glass optical fibers commonly ranges from $+0.25 \times 10^{-6}$ to $+1.25 \times 10^{-6}$/°F ($+0.45 \times 10^{-6}$ to $+2.25 \times 10^{-6}$/°C). Accordingly, the extent of the expansion and contraction tendency of the elongated member of thermotropic liquid crystalline polymer tends to beneficially counteract the expansion and contraction of other elements incorporated within an optical fiber cable. The coefficient of linear thermal expansion can be conveniently determined with a du Pont thermomechanical analyzer while examining the elongated member at temperatures below 100°C.

The elongated member of thermotropic liquid crystalline polymer in accordance with the present invention may be incorporated as a stiffening member in optical fiber cables of a wide variety of designs.

The following examples are presented as specific illustrations of the invention. It should be understood, however, that the invention is not limited to the specific details set forth in the examples.

## Example 1

A wholly aromatic polyester which exhibits thermotropic liquid crystalline properties was selected for use in the formation of a melt extruded elongated member in accordance with the present invention. The wholly aromatic polyester was formed in accordance with the teachings of United States Patent No

4 161 470 and consisted of 73 mole percent of recurring p-oxybenzoyl units and 27 mole percent of recurring 6-oxy-2-naphthoyl units. The wholly aromatic polyester exhibited an inherent viscosity of 8.4 dl/g when dissolved in a concentration of 0.1 percent by weight of pentafluorophenol at 60°C, and a differential scanning calorimetry melting temperature peak of 289°C.

The molten wholly aromatic polyester while at a temperature of 290°C and under a pressure of 1330 psi (91.7 bar) was extruded through a tapered circular die having a full entry angle of 60°C and an exit opening of 0.25 inch (6.35 mm) diameter and a land length of 0.25 inch (6.35 mm), positioned on a Brabender extruder. Immediately before the die filter screens of 100/20/150/20/200 mesh were placed and were followed by a grid to induce elongational flow in accordance with the teachings of United States Patent No 4 332 759. The pressure was measured upstream from the filter screens. The molten polymer was extruded into a quench bath having a length of four feet which consisted of circulating tap water at a temperature of approximately 15 to 20°C. The resulting solidified elongated member had a length of 1.2 miles (1.93 km) and was wrapped on a rotating twelve inch (30.5 cm) diameter take-up roll which was travelling at a rate of approximately 100 feet (30.5 m) per minute. The rotation of the take-up roll produced a drawdown of approximately 92 prior to solidification. The resulting elongated member had a substantially uniform circular cross-section of 0.026 inch (0.66 mm), a cross-sectional area of $5.3 \times 10^{-4}$ square inch (0.34 $mm^2$), and an aspect ratio of 2,924,000. The circular cross-sectional configuration is illustrated in Fig. 5.

A portion of the elongated member was subjected to heat treatment in order to enhance its physical properties. More specifically, it was heated in a nitrogen atmosphere from room temperature to 250°C over a period of one hour, and subsequently from 250 to 300°C over a period of eleven hours. Following such heat treatment the differential scanning calorimetry melting temperature peak of the wholly aromatic polyester was 324°C and the polymer was insoluble in pentafluorophenol.

The physical properties of the resulting elongated member are summarized below before and after the heat treatment.

| | Before Heat Treatment | After Heat Treatment |
|---|---|---|
| Tensile Modulus, psi (kbar) | 7,590,000 (523) | 8,370,000 (577) |
| Tensile Strength, psi (kbar) | 89,000 (6.14) | 142,000 (9.79) |
| Elongation, percent | 1.26 | 1.75 |
| Coefficient of Linear Thermal Expansion per °F | $-7.0 \times 10^{-6}$ | $-7.4 \times 10^{-6}$ |
| (per °C) | $(-12.6 \times 10^{-6})$ | $(-13.3 \times 10^{-6})$ |

Example 2

Example 1 was substantially repeated with the exception that a wholly aromatic poly(ester-amide) which exhibits thermotropic liquid crystalline properties was substituted for the wholly aromatic polyester of Example 1 and different extrusion conditions were employed. More specifically, the wholly aromatic poly(ester-amide) was formed in accordance with the teachings of United States Patent No 4 330 457 and was derived from 60 mole percent of 6-hydroxy-2-naphthoic acid, 20 mole percent of terephthalic acid, and 20 mole percent of p-aminophenol. The wholly aromatic poly(ester-amide) exhibited an inherent viscosity of 4.41 dl/g when dissolved in a concentration of 0.1 percent by weight in pentafluorophenol at 60°C, and a differential scanning calorimetry melting temperature peak of 284°C.

The molten poly(ester-amide) while at a temperature of 290°C was extruded through a tapered circular die having a full entry angle of 60°C, an exit diameter of 0.12 inch (3.05 mm) and a land length of 0.005 inch (0.127 mm), positioned on a ZSK corotating twin screw extruder. The twin screw was designed to provide maximum shearing in the kneading section and was vented to remove volatiles. The molten extruded polymer was drawndown at a ratio of 18.4 by a rotating twelve inch (30.5 cm) diameter take-up roll which was travelling at a rate of 480 feet (146 m) per minute. A water quench bath was utilized as described in Example 1. A substantially uniform circular rod was formed having a 0.028 inch (0.7 mm) diameter, a cross-sectional area of $6.2 \times 10^{-4}$ square inch (0.40 $mm^2$), a length of 1.8 miles (2.9 km), and an aspect ratio of 4,073,000. The cross-sectional configuration is illustrated in Fig. 3. A portion of the elongated member also was heat treated as described in Example 1. Following such heat treatment the differential scanning calorimetry melting temperature peak of the wholly aromatic poly(ester-amide) was 312°C, and the inherent viscosity was 11.5 dl/g.

The physical properties of the resulting elongated member are summarized below before and after the heat treatment.

| | Before Heat Treatment | After Heat Treatment |
|---|---|---|
| Tensile Modulus, psi (kbar) | 8,800,000 (607) | 9,250,000 (638) |
| Tensile Strength, psi (kbar) | 106,000 (7.31) | 185,000 (12.75) |
| Elongation, percent | 1.47 | 2.19 |
| Coefficient of Linear Thermal Expansion per °F | $-6.7 \times 10^{-6}$ | $-7.8 \times 10^{-6}$ |
| (per °C) | $(-12.06 \times 10^{-6})$ | $(-14.04 \times 10^{-6})$ |

Example 3

Example 1 can be substantially repeated to form an elongated member having a tubular cross-section as illustrated in Fig. 6. A tubular die of having an outer diameter of 0.08 inch (2.03 mm) and an inner diameter of 0.04 inch (1.02 mm) is selected and nitrogen gas at ambient temperature (ie 23°C) is introduced into the center of the molten thermotropic liquid crystalline polymer. Also the extruded polymer is passed through a circular sizing die and an outer diameter of 0.04 inch (1.02 mm) which is associated with a vacuum sizing tank to insure the production of an elongated member having a substantially uniform cross-sectional configuration. The resulting tubular elongated member has an outer diameter of 0.04 inch (1.02 mm), a wall thickness of 0.01 inch (0.25 mm), a length of 1.5 miles (2.4 km), a polymer cross-sectional area of $9.43 \times 10^{-4}$ square inch (0.61 $mm^2$), and an aspect ratio of 9,504,000 wherein the wall thickness is considered to be the minimum cross-section measurement. It is anticipated that the other physical properties will be within the parameters specified herein.

Example 4

Example 1 can be substantially repeated to form an elongated member wherein the cross-section has a central core and a plurality of projections radiating outwardly therefrom as illustrated in Fig. 7. A die of like cross-section but of larger dimensions is selected and the extruded elongated member is drawndown to the desired dimensions which are imparted with the aid of a subsequently positioned sizing die. The resulting elongated member has a central core of 0.05 inch (1.27 mm) diameter as measured to where the projections begin, and the radial projections each have a length of 0.03 inch (0.76 mm) beyond the core, and a width which ranges from 0.015 to 0.02 inch (0.38 to 0.51 mm). The length is 1.5 miles (2.4 km), the polymer cross-sectional area is $5.1 \times 10^{-3}$ square inch, (3.2 $mm^2$) and the aspect ratio os 6,336,000 wherein the 0.015 inch (0.38 mm) minimum dimension of the projections is considered to be the minimum cross-section measurement. It is anticipated that the other physical properties will be within the parameters specified herein.

**Claims**

1. A melt extruded elongated member (12, 22, 28, 32, 34, 50, 54) of substantially uniform cross-sectional configuration for use as a stiffening support in an optical fiber cable characterised in that such member is composed of a thermotropic liquid crystalline polymer.

2. A reinforced fiber optic cable (8) including at least one optical fiber (10, 38, 52) and at least one elongated melt extruded member (12, 22, 28, 32, 34, 50, 54) extending generally in the direction of the fiber characterised in that such member is composed of a thermotropic liquid crystalline polymer.

3. A reinforced fiber optic cable (8) comprising at least one optical fiber (10) and at least one elongated member (12) of a thermotropic liquid crystalline polymer, the member comprising a hollow tube (12) which has been formed by melt extrusion.

4. A reinforced fiber optic cable as claimed in Claim 3 including a plurality of optical fibers (10), each of which is provided with its own elongated member (8) in the form of a tube within which the optical fiber is disposed.

5. A reinforced fiber optic cable (8) including a plurality of optical fibers (10) and an elongated melt extruded member (28, 32, 34) of a thermotropic liquid crystalline polymer which is disposed centrally of, and extends generally in the direction of, the fibers (10).

6. A reinforced fiber optic cable (8) as claimed in Claim 5 in which the elongated member is in the form of a channel member which includes a central core (32) and a plurality of projections (34) radiating outwardly therefrom to form locations for the plurality of optical fibers (38) which are located therein.

7. A reinforced fiber optic cable (8) as claimed in Claim 2 including a plurality of optical fibers (52) which are arranged in spaced rows with a layer (50) of a thermotropic liquid crystalline polymer separating adjacent rows.

8. A reinforced fiber optic cable (8) as claimed in any one of Claims 2 to 7 provided with a jacket (24, 30) within which the optical fibers (10, 38) and elongated members (12, 22, 32, 34) are located.

9. A reinforced fiber optic cable as claimed in Claim 8 in which the jacket (24, 30) is a tube forming a continuous sheath for the cable, the tube being composed of a thermotropic crystalline polymer.

10. A reinforced fiber optic cable as claimed in Claim 8 in which the jacket (30) is formed as a helical winding of an elongated member having a rectangular cross section, such member being composed of a thermotropic crystalline polymer.

**Patentansprüche**

1. Schmelzextrudiertes langgestrecktes Bauelement (12, 22, 28, 32, 34, 50, 54) von im wesentlichen einheitlicher Querschnittsform zur Verwendung als tragender Teil in einem Lichtleitfaserkabel, dadurch gekennzeichnet, daß das Bauelement aus einem thermotropen flüssigkristallinen Polymer besteht.

2. Verstärktes Lichtleitfaserkabel (8) bestehend aus wenigstens einer Lichtleifaser (10, 38, 52) und wenigstens einem schmelzextrudierten langgestreckten Bauelement (12, 22, 28, 32, 34, 50, 54), das sich allgemein in der Richtung der Faser erstreckt, dadurch gekennzeichnet, daß das Bauelement aus einem thermotropen flüssigkristallinen Polymer besteht.

3. Verstärktes Lichtleitfaserkabel (8) bestehend aus wenigstens einer Lichtleitfaser (10) und wenigstens einem langgestreckten Bauelement (12) aus einem thermotropen flüssigkristallinen Polymer, dadurch gekennzeichnet, daß das Bauelement aus einem hohlen Schlauch (12), der durch Schmelzextrusion erhalten wurde, besteht.

4. Verstärktes Lichtleitfaserkabel nach Anspruch 3, gekennzeichnet durch eine Vielzahl von Lichtleitfasern (10), von denen jede mit einem langgestreckten Bauelement (8) in Form eines Schlauches, in welchem die Lichtleitfaser angeordnet ist, versehen ist.

5. Verstärktes Lichtleitfaserkabel (8) dadurch gekennzeichnet, daß es aus einer Vielzahl von Lichtleitfasern (10) und ein langgestrecktes schmelzextrudiertes Bauelement (28, 32, 34) aus einen thermotropen flüssigkristallinen Polymer, welches zentral zu den Fasern (10) angeordnet ist und sich allgemein in der Richtung derselben erstreckt, besteht.

6. Verstärktes Lichtleitfaserkabel nach Anspruch 5, dadurch gekennzeichnet, daß das langgestreckte Bauelement in Form eines Kanalteils vorliegt, der einen zentralen Kern (32) und eine Vielzahl von Vorsprüngen (34) aufweist, die sich radial von diesem nach auswärts erstrecken um Aufnahmestellen für die Vielzahl von Lichtleitfasern, die darin angeordnet werden, zu bilden.

7. Verstärktes Lichtleitfaserkabel (8) nach Anspruch 2, dadurch gekennzeichnet, daß es aus einer Vielzahl von Lichtleitfasern (52) besteht, die zueinander in im Abstand liegenden Reihen angeordnet sind, wobei benachbarte Reihen durch eine Schicht (50) aus thermotropem kristallinem Polymer getrennt sind.

8. Verstärktes Lichtleitfaserkabel (8) nach einem der Ansprüche 2 bis 7, dadurch gekennzeichnet, daß es mit einem Mantel (24, 30) versehen ist, innerhalb welchem Lichtleitfasern (10, 38) und langgestreckte Bauelemente (12, 22, 32, 34) angeordnet sind.

9. Verstärktes Lichtleitfaserkabel nach Anspruch 8, dadurch gekennzeichnet, daß der Mantel (24, 30) ein Schlauch ist, der eine zusammenhängende Hülle für das Kabel bildet, wobei der Schlauch aus thermotropem kristallinem Polymer besteht.

10. Verstärktes Lichtleitfaserkabel nach Anspruch 8, dadurch gekennzeichnet, daß der Mantel (30) aus einer schraubenförmigen Windung eines langgestreckten Bauelements bestehend aus einem thermotropen kristallinen Polymer gebildet ist.

**Revendications**

1. Objet de forme allongéeextrudé en phase fondue (12, 22, 28, 32, 34, 50, 54) de configuration en section transversale sensiblement uniforme pour utilisation en tant que support renforçant dans un câble de fibre optique caractérisé en ce que ledit objet se compose d'un polymère thermotrope formant des cristaux liquides.

2. Câble optique de fibre renforcé (8) comprenant au moins une fibre optique (10, 38, 52) et au moins un objet de forme allongéeextrudé en phase fondue (12, 22, 28, 32, 34, 50, 54) s'étendant généralement dans la direction de la fibre caractérisé en ce qu'un tel objet se compose d'un polymère thermotrope foirmant des cristaux liquides.

3. Câble optique de fibre renforcé (8) comprenant au moins un fibre optique (10) et au moins un objet allongé (12) d'un polymère thermotrope formant des cristaux liquides, l'objet comprenant un tube creux (12) qui a été formé par extrusion en phase fondue.

4. Câble optique de fibre renforcé selon la revendication 3 comprenant un certain nombre de fibres optiques (10) dont chacune est pourvue de son propre objet allongé (8) sous la forme d'un tube dans lequel est disposée la fibre optique.

5. Câble optique de fibre renforcé (8) comprenant un certain nombre de fibres optiques (10) et un objet de forme allongée extrudé en phase fondue (28, 32, 34); en un polymère thermotrope formant des cristaux liquides qui est disposé au centre de et s'étend généralement dans la direction des fibres (10).

6. Câble optique de fibre renforcé (8) selon la revendication 5 où l'objet allongé a la forme d'un organe

formant gorge qui comprend une âme centrale (32) et un certain nombre de protubérances (34) qui en rayonnent vers l'extérieur pour former des emplacements pour la quantité des fibres optiques (38) qui s'y trouvent.

7. Câble optique de fibre renforcé (8) selon la revendication 2 comprenant un certain nombre de fibres optiques (52) qui sont agencées en rangées espacées avect une couche (50) d'un polymère cristallin thermotrope séparant des rangées adjacentes.

8. Câble optique de fibre reforcé (8) selon l'une quelconque des revendications 2 à 7 pourvu d'une chemise (24, 30) dans lequelle les fibres optiques (10, 38) et les organes allongés (12, 22, 32, 34) sont placés.

9. Câble optique de fibre renforcé selon la revendication (8) où la chemise (24, 30) est un tube formant une gaine continue pour le câble, le tube se composant d'une polymère thermotrope cristallin.

10. Câble optique de fibre renforcé selon la revendication 8 où la chemise (30) est formée en un enroulement hélicoïdal d'un objet allongé ayant une section transversale rectangulaire, cet objet se composant d'un polymère thermotrope cristallin.

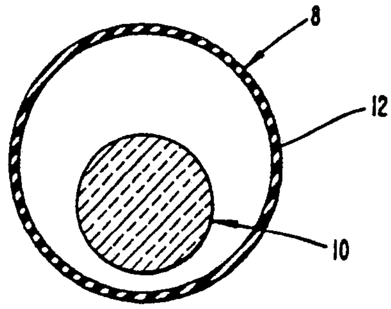


Fig. 1

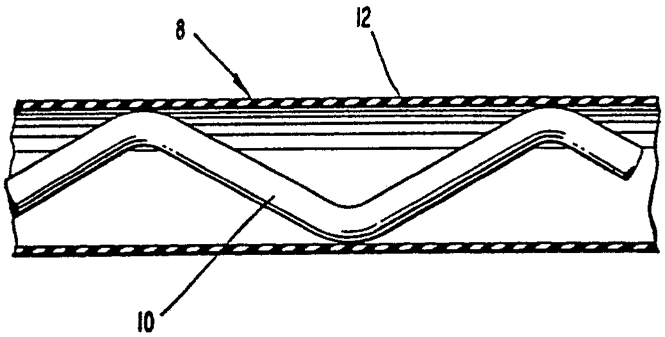


Fig. 4

Fig. 3

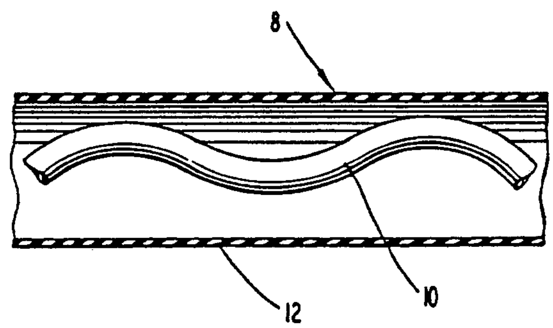


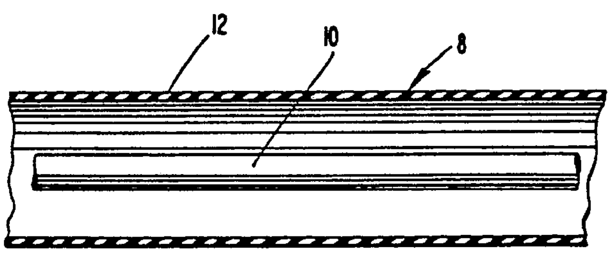


Fig. 2

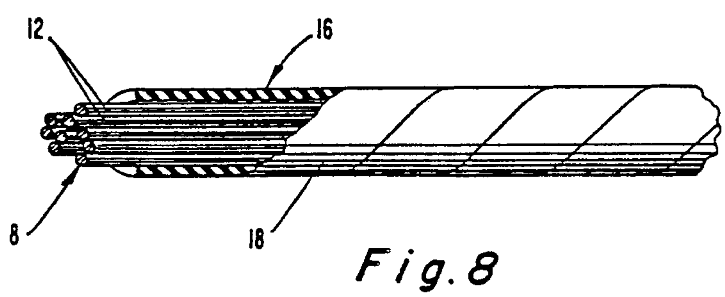


Fig. 8

Fig. 5

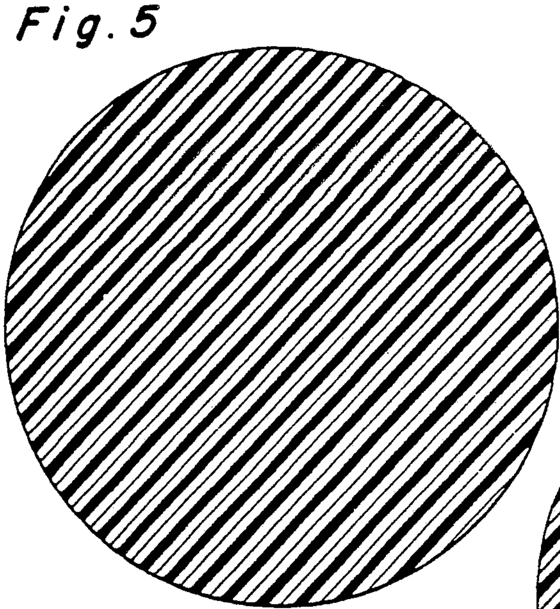

Fig. 6

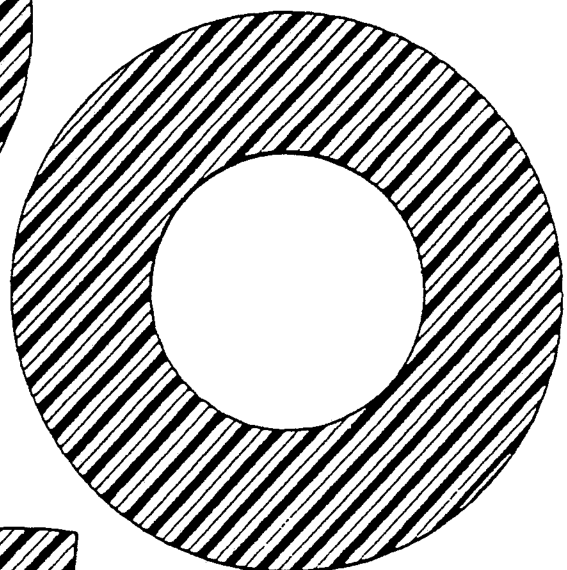

Fig. 7

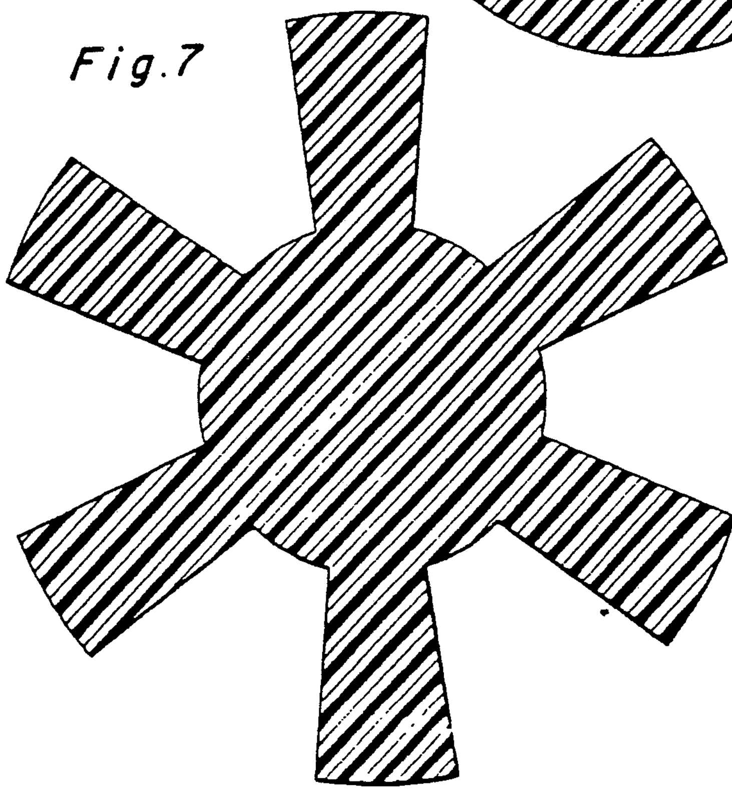

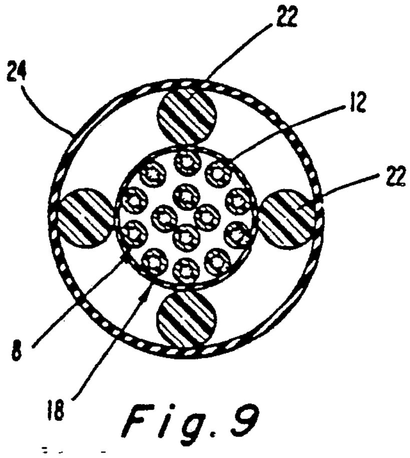


Fig. 9

Fig. 10

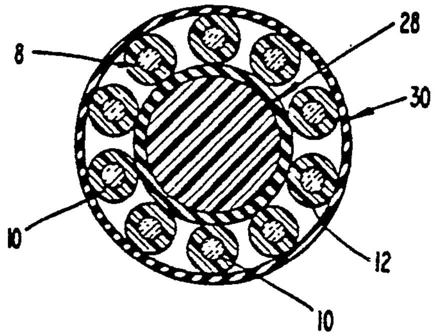


Fig. 11

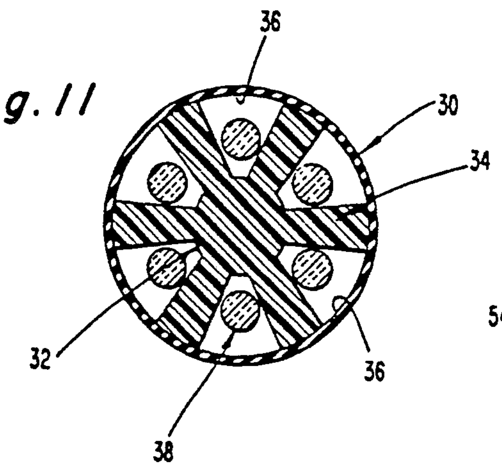


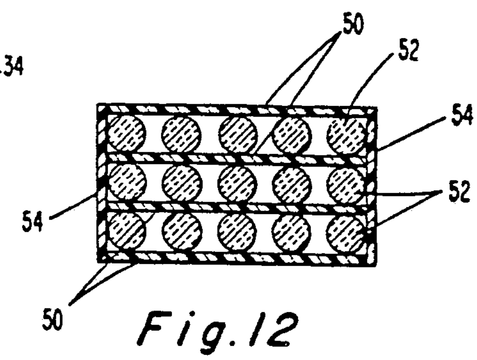


Fig. 12